# EUROPEAN PATENT APPLICATION

(11) **EP 3 626 684 A1**
(43) Date of publication of application: **25.03.2020**
(21) Application number: 18306221.5
(22) Date of filing: 20.09.2018
(51) Int. Cl.: C02F 3/28, C02F 11/04, C05B 7/00, C05F 7/00, C02F 11/12, C02F 101/16

(54) **METHOD FOR PHOSPHORUS RECOVERY AND AMMONIUM ABATEMENT FROM WASTEWATER**

(71) Applicant: SUEZ Groupe, 92040 Paris la Défense Cedex (FR)
(72) Inventor: HADDAD, Mathieu, 92310 SEVRES (FR); DE ROTALIER, Laure, 92600 ASNIERES SUR SEINE (FR)
(74) Representative: Esselin, Sophie

(57) **Abstract**

The invention concerns a method for phosphorus recovery and ammonium abatement from wastewater comprising phosphorus, ammonium and magnesium, comprising:
• a first step (101) of acidogenesis of a first mixture of solids, liquids and microorganisms from wastewater, wherein said microorganisms contain phosphorus and ammonium, so as to produce methane and a second mixture comprising magnesium, ammonium and dissolved phosphorus;
• a second step (102) of separating the phases of the second mixture into a phosphorus-rich liquid and a third phosphorus-reduced mixture;
• a third step (103) of mesophilic methanogenesis of the third phosphorus-reduced mixture, so as to produce methane and a fourth ammonium-rich mixture;
• a fourth step (104) of dewatering the fourth ammonium-rich mixture to produce an ammonium-rich liquid and a phosphorus-reduced, ammonium-reduced sludge;
• a fifth step (105) of mixing the ammonium-rich liquid with the phosphorus-rich liquid in a precipitation device, so as to form struvite and a struvite free, phosphorus free liquid.

## Description

### TECHNICAL FIELD OF THE INVENTION

The invention relates to the field of phosphorus recovery and ammonium abatement by struvite precipitation. The invention concerns a method and installation for phosphorus recovery and ammonium abatement from wastewater.

### BACKGROUND

Sludge from sewage treatment plants contains various chemical elements, including phosphorus (also referred to as "P") that is usually found as phosphate, and nitrogen (also referred to as "N") that is usually found as ammonium. These chemical elements can be part of nutrients that are recovered for later use, for example in the form of fertilizer, and/or may be undesired.

Ammonium and phosphate can be simultaneously removed through struvite precipitation downstream the digester on either the sludge phase or the centrate or filtrate.

The problem of phosphorus is the protection of the digester and downstream equipment and installations. Following the digestion step, during the transfer of the digested sludge to a digested sludge holding tank or to a dewaterer, a degassing of carbon dioxide occurs, thus resulting in a rather sudden increase of the pH. In the presence of magnesium, ammonium and phosphorus under equimolar conditions, this can lead to an undesired struvite precipitation reaction in the valves and outlets of the digester, in the digested sludge holding tank or in the dewatering equipment (e.g. centrifuge), putting these equipments at risk of clogging as well as reducing the active volume of the digester and the digested sludge holding tank.

Another element which is present in sludge from sewage treatment plants is carbon, which is preferably recovered and valued as methane, typically using a digestion step. The ability of a sludge and/or waste to produce methane via a digestion process is called the methanogenic potential.

Different sludge treatment processes are described in the prior art, but they generally focus on reducing one chemical element at a time, i.e. phosphorus or nitrogen, or if both nitrogen abatement and phosphorus recovery are taken into account, it is to the detriment of methane production. For instance, document EP 2 238 081 discloses a sludge phosphorus and magnesium stripping process and struvite production system, wherein phosphorus is removed from microorganisms from wastewater by adding readily biodegradable carbons (RBCs), such as volatile fatty acids (VFAs). The obtained mixture is subjected to a fermentation step. The resulting phosphorus-reduced magnesium-reduced mixture is sent to an anaerobic digester and a dewatering unit to produce an ammonia-rich liquid. Finally, the ammonia-rich liquid is mixed with the phosphorus-rich and magnesium-rich liquid from the fermentation step to produce struvite. This process does not aim to produce methane, and does not value the carbon at all. Quite on the contrary, the removal of phosphorus from the microorganisms requires the addition of a carbon source, namely RBCs. On the other hand, the fermentation step produces carbon dioxide, which means that the carbon present in the mixture is consumed to form carbon dioxide, thus reducing the methanogenic potential of the process. In other words, in the process disclosed in document EP 2 238 081, the phosphorus-reduced mixture is not obtained by a digestion but by undergoing a sludge pre-treatment consisting in placing the sludge in anaerobic conditions and adding carbons, without any heating.

The invention aims to overcome all or parts of the problems mentioned above.

### SUMMARY OF THE INVENTION

The invention aims to provide a solution to recover phosphorus and reduce ammonium from wastewater by struvite precipitation while producing methane without being faced to unwanted precipitation. The invention enables to optimize the phosphorus and preferably also nitrogen recovery, while optimizing or at least not be detrimental to the methanogenic potential of the process. The invention has also positive effects on the wastewater treatment by producing EPA (Environmental Protection Agency) compliant sludge for Class A biosolids under 40 CFR Part 503 Biosolids rule. Such class A sludge may be used and commercialized as a fertilizer for agricultural purposes.

To this end, in a first aspect, the invention concerns a method for phosphorus recovery and ammonium abatement from wastewater comprising phosphorus, ammonium and magnesium, said method comprising:
- a first step of acidogenesis of a first mixture of solids, liquids and microorganisms from wastewater, wherein said microorganisms contain phosphorus and ammonium, so as to produce methane and a second mixture comprising magnesium, ammonium and dissolved phosphorus;
- a second step of separating the phases of the second mixture into a phosphorus-rich liquid and a third phosphorus-reduced mixture;
- a third step of mesophilic methanogenesis of the third phosphorus-reduced mixture, so as to produce methane and a fourth ammonium-rich mixture;
- a fourth step of dewatering the fourth ammonium-rich mixture to produce an ammonium-rich liquid and a phosphorus-reduced, ammonium-reduced sludge;
- a fifth step of mixing the ammonium-rich liquid with the phosphorus-rich liquid in a precipitation device, so as to form struvite and a struvite free, phosphorus free liquid.
The method enables to recover struvite upstream the methanogenic reactor, thus preventing it from unwanted struvite precipitation in the reactor. The method further enables to valorize carbon and produce methane and benefit from the methanogenic potential of the wastewater.

As used herein, the term "struvite free liquid" does not contain any solid (precipitated) struvite. Advantageously, it further means that the liquid has a "struvite precipitation potential" of substantially 0. In other words, a "struvite free liquid" is essentially devoid of any solid struvite that could clog the devices and pipes, and is under conditions which do not favor struvite precipitation, in particular in terms of pH, but also in terms of concentration of the constituents of struvite (magnesium (Mg²⁺), ammonium (NH₄⁺) or phosphate (PO₄³⁻)), said concentrations being low enough to prevent any struvite precipitation.

As used herein, the term "phosphorus free liquid" means that the concentration of phosphorus is significantly reduced as compared with the liquid introduced into the precipitation device of the fifth step. In general, a "phosphorus free liquid" has a concentration of phosphorus of around 25 mg/L. Therefore, typically, a phosphorus free liquid has a concentration of phosphorus of below 50 mg/L, preferentially between 5 mg/L and 30 mg/L, that is of substantially 0.

Acidogenesis is the second stage in the four stages of anaerobic digestion. The biological process of acidogenesis results in the breakdown of the hydrolysed components by acidogenic (fermentative) bacteria. Simple monomers are converted into volatile fatty acids, along with ammonia, carbon dioxide, and hydrogen sulfide, as well as other byproducts.

Advantageously, the acidogenesis of the first step may be carried out at a temperature between 50 and 60°C. In such case, the acidogenesis is referred to as being "thermophilic". Such temperature range optimizes to the phosphorus release during the first step.

Advantageously, the acidogenesis of the first step is performed at a pH between 5,3 and 5,7. The acidogenesis presents an optimum reaction rate at this pH range.

The second step of phase separation is performed using methods well-known to the person of skill in the art.

Methanogenesis is the biological production of methane mediated by strictly anaerobic microorganisms from the Archaea domain commonly called methanogens. Methanogens produce CH₄ by two major pathways, conversion of the methyl group of acetate and reduction of CO₂ coupled to the oxidation of formate or H₂.

Advantageously, the methanogenesis of the third step is performed at a temperature between 35 and 41°C.

Advantageously, the methanogenesis of the third step is performed at a pH between 7,0 and 7,5. Keeping the pH into such range enables to maintain the stability of the methane production.

The fourth dewatering step is performed using methods well-known to the person of skill in the art.

According to a variant, the method may comprise, before or simultaneously to the fifth step, a step of adding magnesium into the precipitation device. This enables to ensure equimolar conditions between ammonium, phosphorus and magnesium in the precipitation device for the precipitation of struvite to occur. The method may also comprise, before or simultaneously to the fifth step, a step of adding phosphorus into the precipitation device. This allows to abate more ammonium which is in excess compared to the phosphorus.

According to a variant, the method may comprise a step of addition of readily biodegradable carbons (RBCs) into the first mixture, so as to help the phosphorus release from the microorganisms into the second mixture during the first step of acidogenesis of the first mixture. Readily biodegradable carbons are well known from the person of skill in the art. They are for instance defined in "Activated Sludge Models ASM1, ASM2 and ASM3", edited by the IWA task group on mathematical modelling for design and operation of biological wastewater treatment, Henze et al (2000), ISBN 1 900222 24 8. Examples of readily biodegradable carbons are volatile fatty acids, in particular lower carboxylic acids (notably C₁-C₄ saturated, linear or ramified hydrocarbon chains substituted by a COOH group) such as acetic acid. Pre-treated wastewater also contains RBCs: therefore, RBCs may also be added as pre-treated wastewater. Finally, RBCs may also be generated by fermentation, for instance as in the unified fermentation and thickening (UFAT) process, disclosed in particular in US 6,387,264.

According to another variant, the method may comprise a step of adding raw primary sludge into the first mixture. Raw primary sludge may be obtained by sedimenting. It is indeed produced into the primary sedimentation tanks. It contains all the readily settleable matter from the wastewater. It has a high organic content - mainly faecal matter and food scraps - and is thus highly putrescible. This enables to accelerate the production of readily biodegradable carbons by the microorganisms in the first mixture, and help the phosphorus release from the microorganisms into the second mixture during the first step of acidogenesis of the first mixture. Advantageously, in this embodiment, no RBCs are added to the first mixture.

According to another variant, the method may comprise a step of adjusting the pH of the mixture of the ammonium-rich liquid and the phosphorus-rich liquid between 7,5 and 8,0 during the fifth step. This pH range is optimum for the struvite precipitation.

According to another variant, the method may comprise a step of collecting struvite from the precipitation device. Once collected, the struvite can be washed, dried and packaged to be sold as fertilizer.

According to another variant, the method may comprise a step of diluting the third phosphorus-reduced mixture stemming from the second step with part of the struvite-free, phosphorus free mixture from the precipitation device. This step renders the third phosphorus-reduced mixture dilute enough to avoid any loss of methanogenic potential. Therefore a good level of methane production is maintained.

The invention also relates to an installation for phosphorus recovery and ammonium abatement from wastewater comprising phosphorus, ammonium and magnesium, said installation comprising:
- an acidogenic reactor having a first inlet and a first outlet, the acidogenic reactor being configured to be fed at the first inlet with a first mixture of solids, liquids and microorganisms from wastewater, wherein said microorganisms contain phosphorus and ammonium, and to produce methane and a second mixture comprising magnesium, ammonium and dissolved phosphorus;
- a phase separator having a phase separator inlet connected to the first outlet of the acidogenic reactor, a first phase separator outlet, a second phase separator outlet, the phase separator being configured to be fed at the phase separator inlet with the second mixture, and to separate the second mixture into a phosphorus-rich liquid and a third phosphorus-reduced mixture;
- a methanogenic reactor having a third inlet connected to the second phase separator outlet of the phase separator and a third outlet, the methanogenic reactor being configured to operate under mesophilic condition and to be fed at the third inlet with the third phosphorus-reduced mixture, and to produce methane and a fourth ammonium-rich mixture;
- a dewatering unit having a fourth inlet connected to the third outlet of the methanogenic reactor and a fourth outlet, the dewatering unit being configured to be fed at the fourth inlet with the fourth ammonium-rich mixture, and to produce an ammonium-rich liquid and a phosphorus-reduced, ammonium-reduced sludge;
- a precipitation device having a fifth inlet connected to the second phase separator outlet of the phase separator and the fourth outlet of the dewatering unit and, a fifth outlet, the precipitation device being configured to be fed at the fifth inlet with the ammonium-rich liquid and the phosphorus-rich liquid, and to form struvite and a struvite free, phosphorus free liquid.

According to an embodiment of the invention, the acidogenic reactor is configured to operate at a temperature between 50 and 60°C.

According to another embodiment of the invention, the precipitation device may comprise a sixth inlet adapted for adding an additional source of magnesium and/or an additional source of phosphorus.

According to another embodiment of the invention, the acidogenic reactor may comprise a seventh inlet adapted for adding readily biodegradable carbons.

According to another embodiment of the invention, the acidogenic reactor may comprise an eighth inlet adapted for adding raw primary sludge.

According to another embodiment of the invention, the precipitation device may comprise a ninth inlet adapted for adding an additional base and configured to adjust the pH of the mixture of the ammonium-rich liquid and the phosphorus-rich liquid.

According to another embodiment of the invention, the installation may comprise a collector configured to collect the struvite from the precipitation device.

According to another embodiment of the invention, the installation may comprise a recirculation loop of the struvite-free, phosphorus free liquid from the precipitation device to the third phosphorus-reduced mixture stemming from the phase separator.

### BRIEF DESCRIPTION OF THE DRAWINGS

The accompanying drawings illustrate various non-limiting, exemplary, innovative aspects in accordance with the present description:
- Figure 1 schematically represents a block diagram with the step(s) of a variant of the method for phosphorus recovery and ammonium abatement from wastewater according to the invention;
- Figure 2 schematically represents a first embodiment of the installation for phosphorus recovery and ammonium abatement from wastewater according to the invention;
- Figure 3 schematically represents a second embodiment of the installation for phosphorus recovery and ammonium abatement from wastewater according to the invention;
- Figure 4 schematically represents a third embodiment of the installation for phosphorus recovery and ammonium abatement from wastewater according to the invention;
- Figure 5 schematically represents a fourth embodiment of the installation for phosphorus recovery and ammonium abatement from wastewater according to the invention;
- Figure 6 schematically represents a fifth embodiment of the installation for phosphorus recovery and ammonium abatement from wastewater according to the invention.

For the sake of clarity, the same elements have the same references in the various figures.

### DETAILED DESCRIPTION

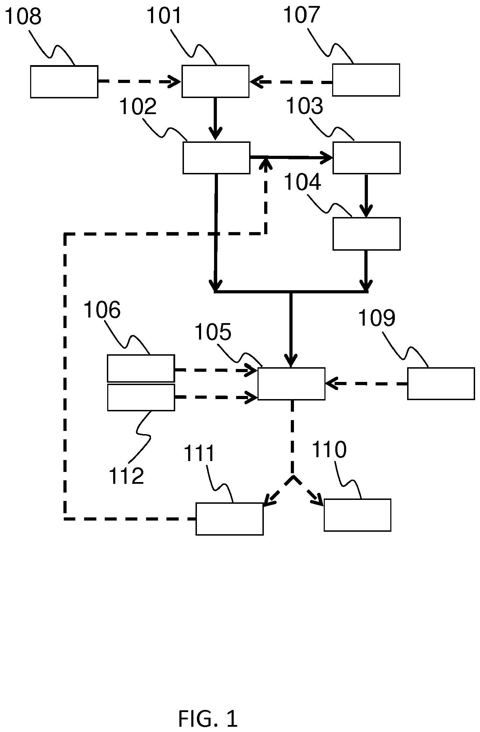

**Figure 1** schematically represents a block diagram with the step(s) of a variant of the method for phosphorus recovery and ammonium abatement from wastewater according to the invention. The wastewater comprises phosphorus, ammonium and magnesium. Magnesium may be present in low concentration in the wastewater. The method according to the invention comprises a first step 101 of acidogenesis of a first mixture 6 of solids, liquids and microorganisms from wastewater, wherein said microorganisms contain phosphorus and ammonium, so as to produce methane 13 and a second mixture 7 comprising magnesium, ammonium and dissolved phosphorus.

The acidogenesis is an acid phase digestion at 55°C or in the range of 50 to 60°C. The acidogenesis transforms simple molecules into low molecular weight acids as lactic acid and volatile fatty acids typically of 2 to 5 carbon atoms. The acidogenesis of the first step 101 may be performed at a temperature between 50 and 60°C. In such case, the acidogenesis is referred to as being "thermophilic". Alternatively the acidogenesis of the first step 101 may be mesophilic. In this case, the acidogenesis is performed under mesophilic conditions at a temperature between 30 and 48°C, and preferably in the range of 35 and 41°C.

The acidogenesis of the first step 101 may be performed at a pH between 5,3 and 5,7, preferably 5,5. The acidogenesis presents an optimum reaction rate at this pH range.

The method further comprises a second step 102 of separating the phases of the second mixture 7 into a phosphorus-rich liquid 8 and a third phosphorus-reduced mixture 9. The phase separation may be performed by centrifugation or filtration, or any other adapted phases separation. The method further comprises a third step 103 of mesophilic methanogenesis of the third phosphorus-reduced mixture 9, so as to produce methane 13 and a fourth ammonium-rich mixture 14. Methanogenesis is a set of metabolic pathways producing methane in certain microorganisms, called methanogens.

It should be noted that any other anaerobic treatment could be implemented instead of the mesophilic methanogenesis.

The measurement of the methanogenic potential of a sludge is usually carried out in a laboratory. The majority of the measurement methods are based on the cultivation, in a closed bioreactor, of a known quantity of the sludge to be characterized and an equally known quantity of anaerobic microorganisms (inoculum), placed under conditions for the development of an optimal anaerobic biological activity. During the test, the microorganisms degrade the organic matter in the sludge, which results in the production of biogas. At the end of this reaction phase, the rate of biogas production drops, which is a sign of the end of the biodegradation of the organic matter. The production of biogas (or directly methane after capture of CO2) is measured over time, and the composition of the biogas produced is usually analyzed by gas chromatography. The methane potential of each sample is determined from the cumulative amount of methane produced during the test.

The methanogenesis of the third step 103 may be performed at a temperature between 35 and 41°C, preferably 37°C.

The methanogenesis of the third step 103 may be performed at a pH between 7,0 and 7,5, preferably 7,3. The pH control is important for the stability of the methane production.

The method according to the invention further comprises a fourth step 104 of dewatering the fourth ammonium-rich mixture 14 to produce an ammonium-rich liquid 15 and a phosphorus-reduced, ammonium-reduced sludge 16.

The fourth step 104 is followed by a fifth step 105 of mixing the ammonium-rich liquid 15 with the phosphorus-rich liquid 8 in a precipitation device 50, so as to form struvite 17 and a struvite free, phosphorus free liquid by precipitation of an N element from ammonium and a P element from phosphorus and a Mg element from magnesium present in the ammonium-rich and/or phosphorus-rich liquid.

It is to be noted that the mixtures 6, 7, 9, 14 comprise solids. The first mixture 6 is typically waste activated sludge, recycled activated sludge or biological mix.

In a variant, the method according to the invention comprises, before or simultaneously to the fifth step 105, a step 106 of adding magnesium into the precipitation device 50. This is of particular interest when the concentration of magnesium in the wastewater (and therefore in the ammonium-rich and/or phosphorus-rich liquid) is low. Adding magnesium into the precipitation device 50 helps the precipitation of struvite 17 by ensuring equimolar conditions between ammonium, phosphorus and magnesium. The magnesium is preferentially under the form of magnesium oxide, magnesium hydroxide or magnesium chloride. The method according to the invention may, before or simultaneously to the fifth step 105, comprise a step 112 of adding phosphorus into the precipitation device 50, preferentially as phosphoric acid or phosphate salt. This optional addition of phosphorus enables to abate more ammonium when in excess compared to the phosphate. This can avoid the construction of a dedicated ammonium treatment.

The method according to the invention may further comprise a step 107 of adding readily biodegradable carbons into the first mixture 6, so as to help the phosphorus release from the microorganisms into the second mixture 7 during the first step 101 of acidogenesis of the first mixture 6. The readily biodegradable carbons may be volatile fatty acids, such as acetic acid or hydrolyzed sludge.

Alternatively to the step 107, the method may comprise a step 108 of adding raw primary sludge into the first mixture 6, wherein the raw primary sludge contains slow biodegradable carbons, so as to accelerate a production of readily biodegradable carbons by the microorganisms in the first mixture 6, and help the phosphorus release from the microorganisms into the second mixture 7 during the first step 101 of acidogenesis of the first mixture 6.

In another variant of the invention, the method comprises a step 109 of adjusting the pH of the mixture of the ammonium-rich liquid and the phosphorus-rich liquid between 7,5 and 8,0 during the fifth step 105, typically by adding a base.

Finally, the method may comprise a step 110 of collecting struvite 17 from the precipitation device 50. The precipitation device 50 may be for example a fluidized bed reactor having a conical bottom from where the granules of struvite may be evacuated. Struvite is formed in the precipitation device 50 as small granules. As the granules grow bigger, they get to the conical bottom of the precipitation device 50 where they are evacuated. The granules may further be washed, dried and packaged to be sold as fertilizer.

The method according to the invention may further comprise a step 111 of diluting the third phosphorus-reduced mixture 9 stemming from the second step 102 with part of the struvite-free, phosphorus free mixture from the precipitation device 50. Usually the first mixture 6 entering the acidogenic reactor is already pre-thickened (about 40 to 60 g/L). During the second step 102 of separating the phases of the second mixture 7, water is removed from the mixture. It should be ensured that the quantity of water removed during this step is put back into the third mixture 9 to maintain an adequate concentration. In other words, it is desired to keep a certain concentration of the mixture before it enters the mesophilic reactor. Doing so, the third phosphorus-reduced mixture 9 is not too concentrated, thus avoiding a loss of the methanogenic potential of the mixture. The dilution of the mixture 9 before the methanogenic reactor 30 contributes to maintain a good level of methane production, while removing phosphorus in the liquid phase.

Downstream the additional water present in the installation due to the recirculation of the mixture 9 is extracted by the dewatering unit 40: a part of the ammonium-rich liquid 15 is conducted to the precipitation device 50 whereas the other part flows to the headworks.

In a preferred realization mode, wastewater sludge is treated in the absence of air during the first step 101 of thermophilic acidogenesis in an acidogenic thermophilic reactor, at 55°C or in the range of 50 to 60°C and during the third step 103 of a mesophilic methanogenesis in a mesophilic methanogenic reactor connected in series with the acidogenic thermophilic reactor. The mean cell residence time shall be at least 2.1 days (± 0.05 d) in the acidogenic thermophilic reactor followed by 10.5 days (± 0.3 d) in the mesophilic methanogenic reactor. Feeding of each digester (or so-called reactor) shall be intermittent and occurring 4 times per day every 6 hours. The mesophilic methanogenic reactor shall be fed in priority from the acidogenic thermophilic reactor. Between two consecutive feedings temperature inside the acidogenic thermophilic reactor should be between 49°C and 55°C with 55°C maintained during at least 3 hours. Temperature inside the mesophilic methanogenic reactor shall be constant at least 37°C.

After the acid phase digestion (step 101), ammonium is very partially released in the second mixture 7. Therefore it is difficult to produce struvite. The invention is based on the mixing of the centrate from the mesophilic phase digestion (ammonium rich) with the acid phase thermophilic digestion (phosphorus rich). In fact, there is no specific P-release step, rather, the digestion is divided into two phases (thermophilic and mesophilic), and the P-rich flow (phosphorus-rich liquid 8) is captured in between these two steps.

Another advantage of the invention resides in the first step 101 of the acidogenesis of a first mixture, wherein no external carbon is added. While operating under thermophilic conditions, i.e. by heating to get the optimum temperature range, the hydraulic retention time in the reactor is reduced, thus leading to a reduced capital expenditure and reducing the heat requirements for the mesophilic methanogenesis downstream.

It should be underlined that the method according to the invention enables to recover struvite upstream the digester 30. Therefore the digester is protected since any in-situ struvite precipitation is prevented.

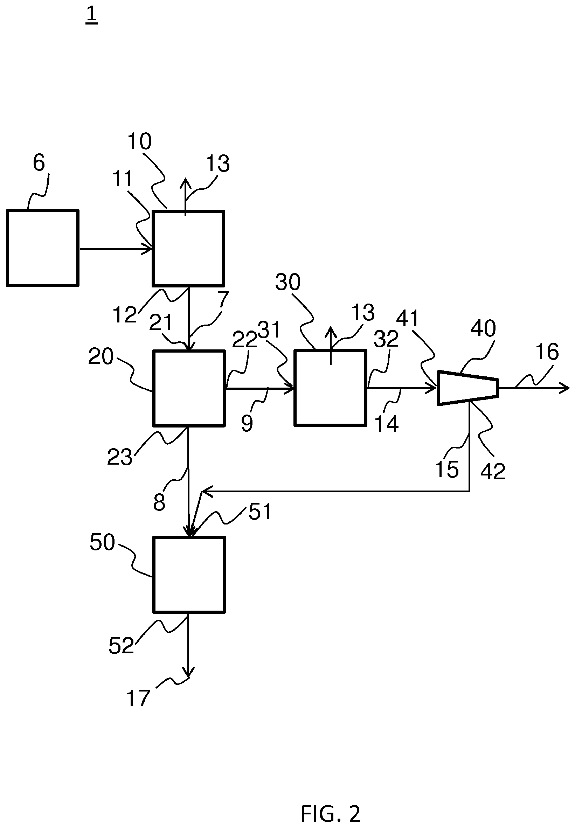

**Figure 2** schematically represents a first embodiment of the installation 1 for phosphorus recovery and ammonium abatement from wastewater according to the invention. The installation1 for phosphorus recovery and ammonium abatement from wastewater comprising phosphorus, ammonium and magnesium, comprises an acidogenic reactor 10 having a first inlet 11 and a first outlet 12. The acidogenic reactor 10 is configured to be fed at the first inlet 11 with a first mixture 6 of solids, liquids and microorganisms from wastewater, wherein said microorganisms contain phosphorus and ammonium, preferably at a pH between 5,3 and 5,7, and to produce methane 13 and a second mixture 7 comprising magnesium, ammonium and dissolved phosphorus. Up to 60% of phosphorus solubilizes in the acid phase digestion process. The installation 1 further comprises a phase separator 20 having a phase separator inlet 21 connected to the first outlet 12 of the acidogenic reactor 10, and two outlets 22, 23: a first phase separator outlet 23 and a second phase separator outlet 22. The phase separator 20 is configured to be fed at the phase separator inlet 21 with the second mixture 7, and to separate the second mixture 7 into a phosphorus-rich liquid 8 and a third phosphorus-reduced mixture 9. Dewatering acidogenically digested sludge isolates the dissolved phosphorus in the phosphorus-rich liquid 8 that can be treated downstream, as will be explained in the following.

The installation comprises a methanogenic reactor 30 having a third inlet 31 connected to the second phase separator outlet 22 of the phase separator 20 and a third outlet 32. The methanogenic reactor 30 is configured to operate under mesophilic condition and to be fed at the third inlet 31 with the third phosphorus-reduced mixture 9, and to produce, preferably at a temperature between 35 and 41°C and at a pH between 7,0 and 7,5, methane 13 and a fourth ammonium-rich mixture 14.

The installation 1 according to the invention further comprises a dewatering unit 40 having a fourth inlet 41 connected to the third outlet 32 of the methanogenic reactor 30 and a fourth outlet 42. The dewatering unit 40 is configured to be fed at the fourth inlet 41 with the fourth ammonium-rich mixture 14, and to produce an ammonium-rich liquid 15 and a phosphorus-reduced, ammonium-reduced sludge 16.

Downstream of the phase separator 20 and the dewatering unit 40, the installation 1 comprises a precipitation device 50 having a fifth inlet 51 connected to the second phase separator outlet 23 of the phase separator 20 and the fourth outlet 42 of the dewatering unit 40 and a fifth outlet 52. The precipitation device 50 is configured to be fed at the fifth inlet 51 with the ammonium-rich liquid 15 and the phosphorus-rich liquid 8, and to form struvite 17 and a struvite free, phosphorus free liquid 53 by precipitation of an N element from ammonium and a P element from phosphorus and a Mg element from magnesium present in the ammonium-rich and/or phosphorus-rich liquid.

The acidogenic reactor 10 may be configured to operate at a temperature between 50 and 60°C, thus operating at thermophilic conditions.

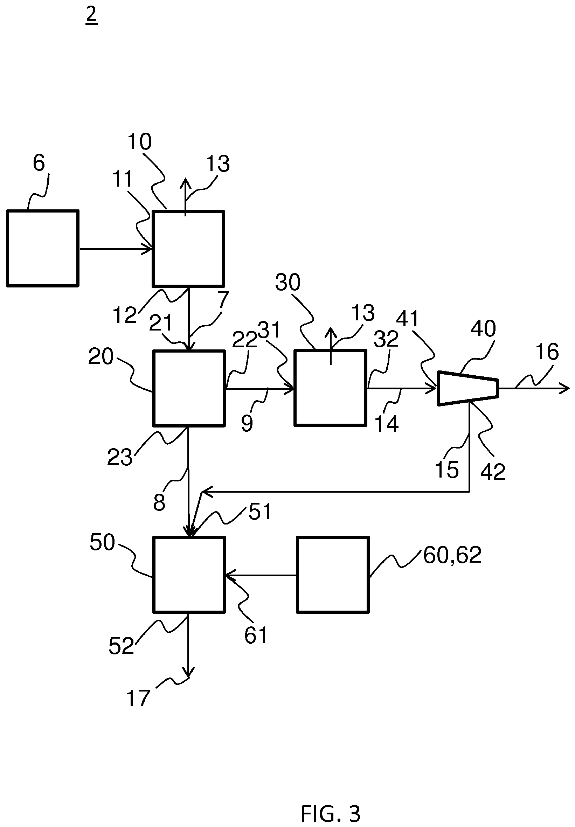

**Figure 3** schematically represents a second embodiment of the installation 2 for phosphorus recovery and ammonium abatement from wastewater according to the invention. In this embodiment and additionally to the elements of the installation 1 presented in Figure 2, the precipitation device 50 comprises a sixth inlet 61 adapted for adding an additional source 60 of magnesium, preferentially magnesium oxide, magnesium hydroxide or magnesium chloride, and/or an additional source 62 of phosphorus, preferentially as phosphorus acid or phosphate salt. The additional source 60 of magnesium enables to adapt the concentration of magnesium in the precipitation device 50 and ensure equimolarity with phosphorus and ammonium to fulfill the conditions of struvite precipitation. When ammonium is in excess in the precipitation device 50 compared to the phosphate, the additional source 62 of phosphorus enables precipitation of struvite, thus further abating ammonium. This can avoid the construction of a dedicated ammonium treatment.

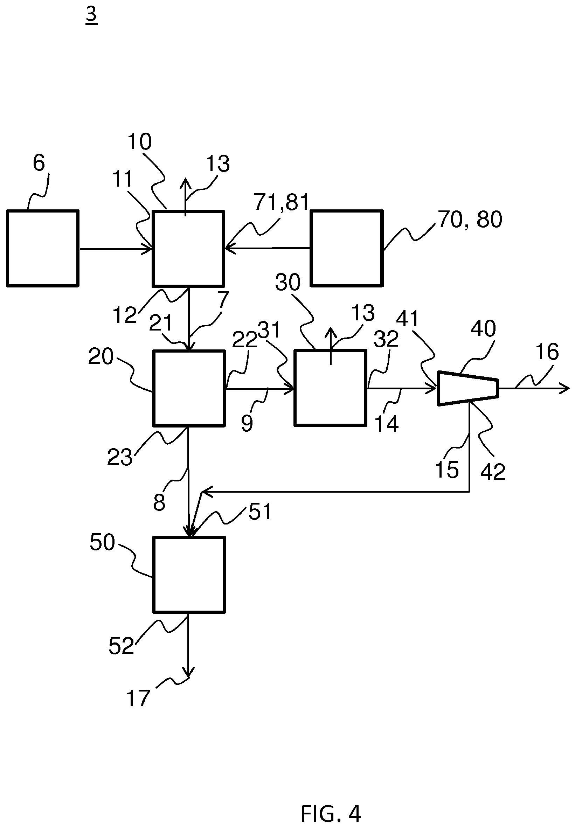

**Figure 4** schematically represents a third embodiment of the installation 3 for phosphorus recovery and ammonium abatement from wastewater according to the invention. The installation 3 comprises the elements of the installation 1. The installation 3 may comprise the additional elements of the installation 2 presented in Figure 3. In this embodiment, the acidogenic reactor 10 further comprises a seventh inlet 71 adapted for adding readily biodegradable carbons 70.

In the installation 3, the acidogenic reactor 10 may further comprise a eighth inlet 81 adapted for adding raw primary sludge 80, wherein the raw primary sludge contains slow biodegradable carbons. The addition of readily biodegradable carbons and/or raw primary sludge containing slow biodegradable carbons helps the phosphorus release from the microorganisms in the acedogenic reactor 10.

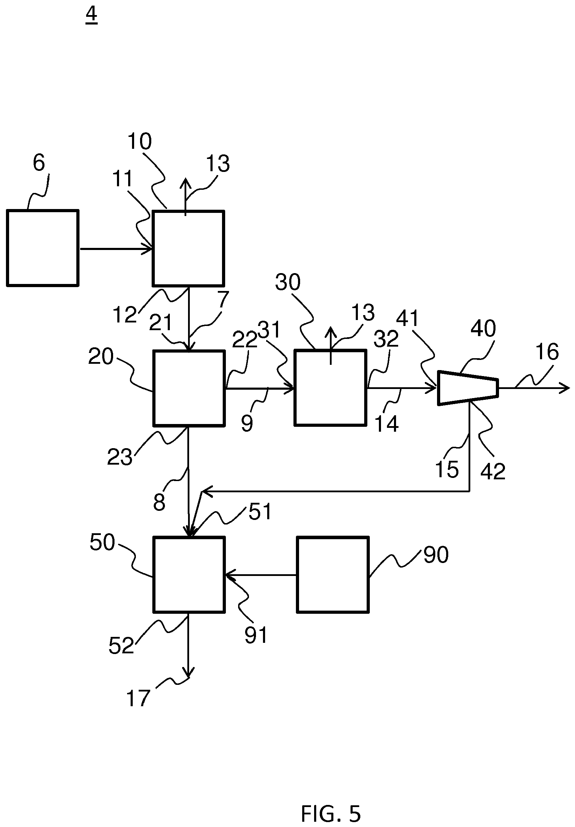

**Figure 5** schematically represents a fourth embodiment of the installation 4 for phosphorus recovery and ammonium abatement from wastewater according to the invention. The installation 4 comprises the elements of the installation 1 already presented in Figure 2. The installation 4 may comprise the additional elements of the installation 2 and/or 3 presented in Figures 3, 4. In the installation 4, the precipitation device 50 further comprises a ninth inlet 91 adapted for adding an additional base 90 configured to adjust the pH of the mixture of the ammonium-rich liquid and the phosphorus-rich liquid, preferably between 7,5 and 8,0 which is the preferred pH-range for struvite precipitation.

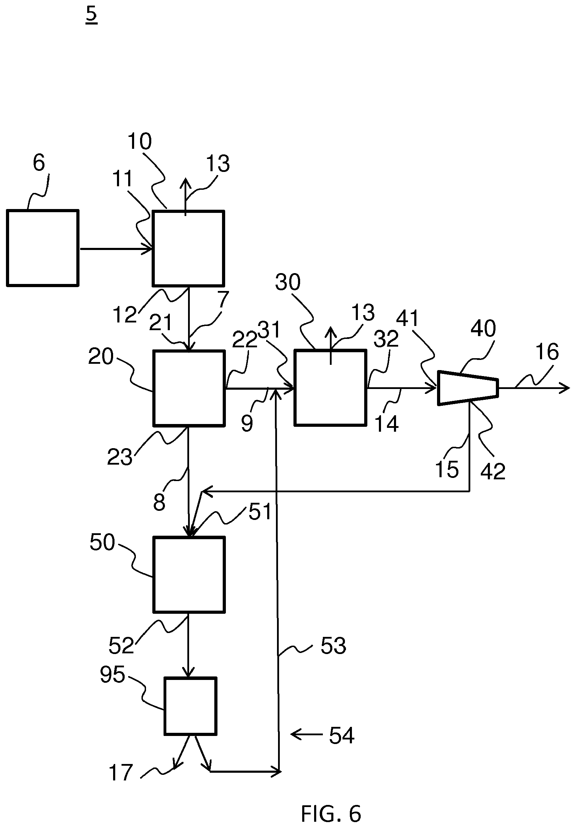

**Figure 6** schematically represents a fifth embodiment of the installation 5 for phosphorus recovery and ammonium abatement from wastewater according to the invention. The installation 5 comprises the elements of the installation 1 already presented in Figure 2. The installation 5 may comprise the additional elements of the installation 2, 3 and/or 4 presented in Figures 3, 4 and 5. The installation 5 further comprises a collector 95 configured to collect the struvite 17 from the precipitation device 50. The collector 95 may for example take the form of a conical bottom from where the granules of struvite are evacuated.

The installation 5 may further comprise a recirculation loop 54 of the struvite-free, phosphorus free liquid 53 from the precipitation device 50 to the third phosphorus-reduced mixture 9 stemming from the phase separator 20. This enable to dilute the third phosphorus-reduced mixture 9 with the struvite-free, phosphorus free liquid 53 from the precipitation device 50. As a consequence, the mixture 9 is not too concentrated. Since a too concentrated mixture 9 would mean a loss of the methanogenic potential of the mixture, the dilution of the mixture 9 before the methanogenic reactor 30 contributes to maintain a good level of methane production.

Downstream the additional water present in the installation due to the recirculation of the mixture 9 is extracted by the dewatering unit 40: a part of the ammonium-rich liquid 15 is conducted to the precipitation device 50 whereas the other part flows to the headworks.

The invention provides a solution for phosphorus recovery and ammonium abatement from wastewater by struvite precipitation without being faced to unwanted precipitation. At the same time methane is produced. The invention further enables an optimization of the recovery of phosphorus and nitrogen, while maintaining the methanogenic potential of the process at its best level.

The present invention encompasses all combinations of any preferred, advantageous and particular embodiments described above.

The examples disclosed in this specification are only illustrative of some embodiments of the invention. They do not in any way limit the scope of said invention which is defined by the appended claims.

## Claims

1. Method for phosphorus recovery and ammonium abatement from wastewater comprising phosphorus, ammonium and magnesium, said method comprising:
• a first step (101) of acidogenesis of a first mixture (6) of solids, liquids and microorganisms from wastewater, wherein said microorganisms contain phosphorus and ammonium, so as to produce methane (13) and a second mixture (7) comprising magnesium, ammonium and dissolved phosphorus;
• a second step (102) of separating the phases of the second mixture (7) into a phosphorus-rich liquid (8) and a third phosphorus-reduced mixture (9);
• a third step (103) of mesophilic methanogenesis of the third phosphorus-reduced mixture (9), so as to produce methane (13) and a fourth ammonium-rich mixture (14);
• a fourth step (104) of dewatering the fourth ammonium-rich mixture (14) to produce an ammonium-rich liquid (15) and a phosphorus-reduced, ammonium-reduced sludge (16);
• a fifth step (105) of mixing the ammonium-rich liquid (15) with the phosphorus-rich liquid (8) in a precipitation device (50), so as to form struvite (17) and a struvite free, phosphorus free liquid.

2. The method of claim 1, wherein the acidogenesis of the first step (101) is performed at a temperature between 50 and 60°C.

3. The method of claim 1 or 2, wherein the acidogenesis of the first step (101) is at performed a pH between 5,3 and 5,7.

4. The method of any one of the preceding claims, wherein the methanogenesis of the third step (103) is performed at a temperature between 35 and 41°C.

5. The method of any one of the preceding claims, wherein the methanogenesis of the third step (103) is performed at a pH between 7,0 and 7,5.

6. The method of any one of the preceding claims, comprising, before or simultaneously to the fifth step (105), a step (106) of adding magnesium into the precipitation device (50), preferentially as magnesium oxide, magnesium hydroxide or magnesium chloride, and/or a step (112) of adding phosphorus into the precipitation device (50), preferentially as phosphoric acid or phosphate salt.

7. The method of any of the preceding claims, comprising a step (107) of adding readily biodegradable carbons into the first mixture (6).

8. The method of any of claims 1 to 6, comprising a step (108) of adding raw primary sludge into the first mixture (6).

9. The method of any one of the preceding claims, comprising a step (109) of adjusting the pH of the mixture of the ammonium-rich liquid and the phosphorus-rich liquid between 7,5 and 8,0 during the fifth step (105), typically by adding a base.

10. The method of any one of the preceding claims, further comprising a step (110) of collecting struvite (17) from the precipitation device (50).

11. The method of claim 10, further comprising a step (111) of diluting the third phosphorus-reduced mixture stemming from the second step (102) with part of the struvite-free, phosphorus free mixture from the precipitation device (50).

12. Installation (1, 2, 3, 4, 5) for phosphorus recovery and ammonium abatement from wastewater comprising phosphorus, ammonium and magnesium, said installation comprising:
- an acidogenic reactor (10) having a first inlet (11) and a first outlet (12), the acidogenic reactor (10) being configured to be fed at the first inlet (11) with a first mixture (6) of solids, liquids and microorganisms from wastewater, wherein said microorganisms contain phosphorus and ammonium, and to produce methane (13) and a second mixture (7) comprising magnesium, ammonium and dissolved phosphorus;
- a phase separator (20) having:
∘ a phase separator inlet (21) connected to the first outlet (12) of the acidogenic reactor (10),
∘ a first phase separator outlet (23)
∘ a second phase separator outlet (22),
the phase separator (20) being configured to be fed at the phase separator inlet (21) with the second mixture (7), and to separate the second mixture (7) into a phosphorus-rich liquid (8) and a third phosphorus-reduced mixture (9);
- a methanogenic reactor (30) having:
∘ a third inlet (31) connected to the second phase separator outlet (22) of the phase separator (20) and
∘ a third outlet (32),
the methanogenic reactor being configured to operate under mesophilic condition and to be fed at the third inlet (31) with the third phosphorus-reduced mixture (9), and to produce methane (13) and a fourth ammonium-rich mixture (14);
- a dewatering unit (40) having:
∘ a fourth inlet (41) connected to the third outlet (32) of the methanogenic reactor (30) and
∘ a fourth outlet (42),
the dewatering unit (40) being configured to be fed at the fourth inlet (41) with the fourth ammonium-rich mixture (14), and to produce an ammonium-rich liquid (15) and a phosphorus-reduced, ammonium-reduced sludge (16);
- a precipitation device (50) having:
∘ a fifth inlet (51) connected to the second phase separator outlet (23) of the phase separator (20) and the fourth outlet (42) of the dewatering unit (40) and,
∘ a fifth outlet (52),
the precipitation device (50) being configured to be fed at the fifth inlet (51) with the ammonium-rich liquid (15) and the phosphorus-rich liquid (8), and to form struvite (17) and a struvite free, phosphorus free liquid (53).

13. The installation (1, 2, 3, 4, 5) of claim 12, wherein the acidogenic reactor (10) is configured to operate at a temperature between 50 and 60°C.

14. The installation (2) of claim 12 or 13, wherein the precipitation device (50) comprises a sixth inlet (61) adapted for adding an additional source (60) of magnesium and/or an additional source (62) of phosphorus.

15. The installation (3) of any of claims 12 to 14, wherein the acidogenic reactor (10) comprises a seventh inlet (71) adapted for adding readily biodegradable carbons (70).

16. The installation (3) to of any of claims 12 to 15, wherein the acidogenic reactor (10) comprises an eighth inlet (81) adapted for adding raw primary sludge (80).

17. The installation (4) of any of claims 12 to 16, wherein the precipitation device (50) comprises a ninth inlet (91) adapted for adding an additional base (90) configured to adjust the pH of the mixture of the ammonium-rich liquid and the phosphorus-rich liquid.

18. The installation (5) of any of claims 12 to 17, comprising a collector (95) configured to collect the struvite (17) from the precipitation device (50).

19. The installation (5) of any of claims 12 to 18, further comprising a recirculation loop (54) of the struvite-free, phosphorus free liquid (53) from the precipitation device (50) to the third phosphorus-reduced mixture (9) stemming from the phase separator (20).
